# EUROPÄISCHE PATENTSCHRIFT

(11) **EP 1 884 311 B1**
(45) Veröffentlichungstag und Bekanntmachung des Hinweises auf die Patenterteilung: **17.02.2010**
(21) Anmeldenummer: 06016180.9
(22) Anmeldetag: 03.08.2006
(51) Int. Cl.: B23Q 1/76, B23G 1/38, B24B 19/02

(54) **Führungseinrichtung für ein Werkzeug, insbesondere für ein Finishwerkzeug**
Guiding device for a tool, especially a finishing tool
Dispositif de guidage d'outil, spécialement outil de finition

(43) Veröffentlichungstag der Anmeldung: 06.02.2008
(73) Patentinhaber: Supfina Grieshaber GmbH & Co. KG, 77709 Wolfach (DE)
(72) Erfinder: Wolber, Simon, 77709 Wolfach (DE); Hildebrandt, Oliver, 78132 Hornberg (DE)
(74) Vertreter: Thielking, Klaus

(56) Entgegenhaltungen:
- EP-A- 0 478 439
- GB-A- 653 254
- US-A- 5 765 455

## Beschreibung

Die Erfindung betrifft eine Führungseinrichtung für ein Werkzeug, insbesondere für ein Werkzeug zur finishenden, bürstenden und/oder polierenden Feinstbearbeitung von Oberflächen eines Werkstücks.

Aus dem Stand der Technik sind Führungseinrichtungen für Werkzeuge bekannt, mit denen die Position und/oder die Lage des Werkzeugs vorgegeben wird. Beispielsweise kann ein als Drehmeißel ausgebildetes Werkzeug an einem Werkzeughalter befestigt sein, der mit dem Längsschlitten einer Drehmaschine verbunden ist.

Bei der Bearbeitung der Oberfläche eines Werkstücks kann das Werkzeug extrem hohen Kräften ausgesetzt sein. In der Praxis müssen Bearbeitungsparameter optimal aufeinander abgestimmt werden, um gute Oberflächenqualitäten bei hohen Materialabtragsleistungen erreichen zu können, ohne das Werkzeug zu überlasten oder übermäßig zu verschleißen.

Die Führungseinrichtung weist mindestens ein zusätzliches Kontaktelement auf, das zumindest mittelbar mit dem Werkzeug verbunden ist und für einen Kontakt mit einem Kontaktabschnitt der Oberfläche des Werkstücks ausgebildet ist.

Aus der EP 0 478 439 B1 ist eine Maschine zur Herstellung von geschliffenen Schrauben ausgehend von Stangen bekannt, mit einer beweglichen Einheit, an welcher ein Schleifwerkzeug und eine Muffe zur Aufnahme einer Stange angeordnet sind.

Aus der US 5, 765,455 ist eine Vorrichtung bekannt mit einem Schlitten und mit einem relativ zu dem Schlitten bewegbaren Kreuzschlitten. An dem Schlitten ist eine Führungshülse für ein Werkstück vorgesehen. An dem Kreuzschlitten ist ein Werkzeughalter für Werkzeuge vorgesehen.

Der vorliegenden Erfindung liegt die Aufgabe zugrunde, eine Führungseinrichtung zu schaffen, mit der das Werkzeug vor hohen Belastungen geschützt werden kann.

Bei der erfindungsgemäßen Führungseinrichtung nach Anspruch 1 steht das Werkstück nicht nur in Kontakt mit dem Werkzeug, sondern zusätzlich mit mindestens einem weiteren Kontaktelement. Hierdurch wird mindestens eine weitere Kontaktstelle geschaffen, an der während der Bearbeitung des Werkzeugs auftretende Kräfte aufgenommen und abgeleitet werden können. Die solchermaßen abgeleiteten Kräfte entlasten das Werkzeug, das somit vor einer übermäßig hohen Belastung geschützt ist.

Die erfindungsgemäße Führungseinrichtung eignet sich besonders gut für Werkzeuge mit geometrisch unbestimmten Schneiden oder Wirkflächen, wie dies bei Finishwerkzeugen, Bürst- oder Polierwerkzeugen der Fall ist. Mit der erfindungsgemäßen Führungseinrichtung können aber auch andere Werkzeuge entlastet werden, beispielsweise Werkzeuge mit geometrisch bestimmten Schneiden.

Das Kontaktelement und das Werkzeug können unmittelbar miteinander verbunden sein. Es ist aber auch möglich, den Kraftfluss zwischen dem Kontaktelement der Führungseinrichtung und dem Werkzeug über zwischengeschaltete Bauteile herzustellen. Dies wird weiter unten noch detaillierter beschrieben.

Da das Kontaktelement und der Kontaktabschnitt des Werkstücks für einen formschlüssigen Eingriff miteinander ausgebildet sind, können während der Bearbeitung der Oberfläche des Werkstücks auftretende Querkräfte mit Hilfe des Kontaktelements gut aufgenommen werden, so dass das Werkzeug von diesen Querkräften entlastet ist. Hierdurch können axiale Positionsfehler ausgeglichen werden, die sich durch Fehler oder Toleranzen in der Positionierung des Werkzeugs und/oder durch Werkstücktoleranzen oder -fehler ergeben können. Auch aus Beschleunigungen resultierende Querkräfte können von dem Kontaktelement der Fuhrungseinrichtung aufgenommen werden, wodurch das Werkzeug entlastet wird.

Der Kontaktabschnitt des Werkstücks kann ein Teil einer bereits vor-, fein- oder feinstbearbeiteten Oberfläche des Werkstücks sein. Der Kontaktabschnitt kann aber auch separat von zu bearbeitenden Oberflächenabschnitten vorgesehen sein.

Der Kontaktabschnitt des Werkstücks kann durch eine Kugellauffläche gebildet sein. Dabei kann sich die Kugellauffläche ohne Steigung oder auch gewindeartig um das Werkzeug herum erstrecken. Der Kontaktabschnitt des Werkstücks kann auch durch eine Gewindefläche eines Gewindes gebildet sein, bspw. eines Spitzgewindes, eines Trapezgewindes oder eines Sägengewindes.

In vorteilhafter Weise ist der Abstand zwischen dem Kontaktelement und dem Werkzeug einstellbar, vorzugsweise in einer zu der Werkzeugachse des Werkzeugs parallelen Richtung. Hierdurch ist es beispielsweise möglich, den Abstand zwischen dem Kontaktelement und dem Werkzeug so einzustellen, dass eine Kugelrollspindel mit einer vorgegebenen Gewindesteigung bearbeitet werden kann.

In vorteilhafter Weise ist das Kontaktelement zylindrisch, kugelformig oder tonnenförmig. Ein solches Kontaktelement kann beispielsweise in eine bereits feinstbearbeitete oder eine noch zu bearbeitende Kugellauffläche eingelegt werden. Durch Auswahl eines entsprechenden Durchmessers des Kontaktelements ist es möglich, nicht nur eine, sondern sogar zwei Berührstellen mit der Kugellaufläche eines im Wesentlichen zylindrischen Werkstücks zu schaffen, so dass Querkräfte an zwei Berührstellen aufgenommen werden können. Die genannten Formen ermöglichen durch den Verzicht auf schroffe Geomtriewechsel einen sanften Kontakt mit der Kontaktfläche des Werkstücks. Das Kontaktelement kann aber auch andere, Ecken aufweisende Formen haben und beispielsweise trapezförmig ausgebildet sein. Ein solches Kontaktelement ist besonders gut für einen Eingriff in eine Kontaktfläche geeignet, die als Gewindefläche eines Trapezgewindes ausgebildet ist.

Nach einer weiteren Ausführungsform der Erfindung ist das Kontaktelement ringförmig, so dass es den Umfang des Werkstücks umgibt. Ein solches Kontaktelement ist besonders stabil. Es kann auch mehrteilig ausgebildet sein, um die Zustellung des Kontaktelements aus einer in Bezug auf das Werkstück seitlichen Richtung zu vereinfachen. Dieses Kontaktelement kann bspw. nach Art einer Schraubenmutter ausgebildet sein und entlang seines Umfangs in Segmente (bspw. zwei 180°-Segmente) unterteilt sein. Die Segmente können jeweils für sich nach radial innen auf das Werkstück zugestellt und dann miteinander verbunden werden.

Besonders hohe Belastungen können von dem Kontaktelement aufgenommen werden, wenn dieses Diamantpartikel aufweist und insbesondere aus einem polykristallinen Diamant-Werkstoff (PKD) gebildet ist. Dieser Werkstoff ist hochbelastbar und verschleißfest. Auch die Verwendung von Hartmetallen, Hartkunststoffen oder keramischen Materialien ist möglich.

Zur Erleichterung der Handhabung des Kontaktelements ist es vorteilhaft, wenn ein Zustellantrieb vorgesehen ist, mit dem das Kontaktelement in Richtung auf den Kontaktabschnitt des Werkstücks und entgegengesetzt bewegbar ist. Dies erleichtert die Handhabung der Führungseinrichtung und ermöglicht eine Automatisierung.

Um festzustellen, ob das Kontaktelement sich in Kontakt mit dem Werkstück befindet oder nicht, ist es vorteilhaft, wenn der Zustellantrieb mit einem Wegmesssystem gekoppelt ist. Das Wegmesssystem liefert somit in zuverlässiger Weise einen Parameter für den Beginn und das Ende der Oberflächenbearbeitung des Werkstücks. Wenn das Kontaktelement zugestellt ist und beispielsweise in Kontakt mit einer vorbearbeiteten Kugellauffläche steht, kann die Bearbeitung der Oberfläche des Werkstücks mit dem Werkzeug begonnen werden. Wenn das Kontaktelement an einem Gewindeauslauf einer sich gewindeartig erstreckenden Kugellauffläche wieder nach radial außen bewegt wird, kann die Oberflächenbearbeitung entweder sofort beendet werden oder es können abschließend noch diejenigen Gewindegänge bearbeitet werden, die sich noch zwischen dem bereits nach radial außen verschobenen Kontaktelement und dem Werkzeug befinden.

Mit Hilfe des Wegmesssystems ist es nicht nur möglich, zu erkennen, dass das Kontaktelement in Kontakt mit einer Kugellauffläche oder mit einem Außengewinde des Werkstücks steht, sondern es erlaubt auch eine Erkennung der Drehlage des Werkstücks, wenn die Position des Kontaktelements entlang der Werkzeugachse bekannt ist. Diese Position kann auch hergeleitet werden, wenn die Position des Werkzeugs und der Abstand des Kontaktelements zu dem Werkzeug bekannt ist.

Wie oben bereits erwähnt können das Kontaktelement und das Werkzeug über zwischengeschaltete Bauteile miteinander verbunden sein. Hierfür besonders geeignet ist eine Vorrichtung, mit der das Werkzeug und/oder das Werkstück rotierend und/oder oszillierend antreibbar ist oder sind. Diese Vorrichtung und ein besonders gut für die erfindungsgemäße Führungseinrichtung geeignetes Werkzeug sind detailliert in der EP 1 884 315 A1 beschrieben.

Es ist weiterhin vorteilhaft, wenn Antriebsmittel vorgesehen sind, mit denen die Vorrichtung entlang eines Verfahrwegs parallel zu der Werkstückachse verfahrbar ist. Auf diese Weise ist es möglich, das Werkzeug und das zumindest mittelbar mit diesem verbundene Kontaktelement entlang eines beispielsweise rotierend angetriebenen Werkstücks zu verfahren, so dass auch gewindeartig verlaufende Kugellaufflächen erzeugt werden können und dabei das Werkzeug von Querkräften zu entlasten. Es ist aber auch möglich, dass die Vorrichtung fest steht und das Werkstück entlang seiner Werkstückachse verschoben wird. Diese Relativbewegung kann auch durch eine Kombination der genannten Möglichkeiten geschaffen werden.

Die Erfindung betrifft ferner ein Verfahren zur Herstellung eines insbesondere als Kugelrollspindel ausgebildeten Werkstücks unter Verwendung einer wie oben beschriebenen Führungseinrichtung. Ein solches Verfahren ist auch in der EP 1 884 315 A1 beschrieben.

Zur Querkraftentlastung des Werkzeugs wird im Rahmen des erfindungsgemäßen Verfahrens vorgeschlagen, dass das Kontaktelement der Führungseinrichtung bereits vor der Bearbeitung der Oberfläche des Werkstücks mit dem Kontaktabschnitt des Werkstücks in Kontakt gebracht wird und während der Bearbeitung dort verbleibt.

Wenn während eines formschlüssigen Kontakts zwischen Kontaktelement und Werkstück das Werkstück rotatorisch angetrieben wird, wird die Führungseinrichtung über den Kontakt des Kontaktelements mit dem Kontaktabschnitt des Werkstücks in einer zu der Werkstückachse parallelen Richtung verschoben und treibt somit auch die Vorrichtung in zu der Werkstückachse des Werkstücks paralleler Richtung an. Hierdurch kann gegebenenfalls auf einen oben genannten separaten Antrieb, der die Vorrichtung entlang eines Verfahrwegs parallel zu der Werkstückachse verfährt, verzichtet werden.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. In der Zeichnung zeigen:
- Figur 1: eine perspektivische, geschnittene Ansicht eines Werkzeugs mit einer Halterung und einem Werkzeug-Antrieb, ohne die erfindungsgemäße Führungseinrichtung;
- Figur 2: eine perspektivische, geschnittene Ansicht einer Vorrichtung mit einem Werkzeug, einer Halterung und einem Werkzeug-Antrieb gemäß Figur 1;
- Figur 3: eine perspektivische, geschnittene Ansicht der Vorrichtung gemäß Figur 2 entsprechend einer Schnittebene III in Figur 2;
- Figur 4: eine perspektivische Ansicht der Vorrichtung gemäß Figur 2 mit einer erfindungsgemäßen Führungseinrichtung für das Werkzeug; und
- Figur 5: eine geschnittene Ansicht der Führungseinrichtung gemäß Figur 4 entsprechend einer Schnittebene V in Figur 4.

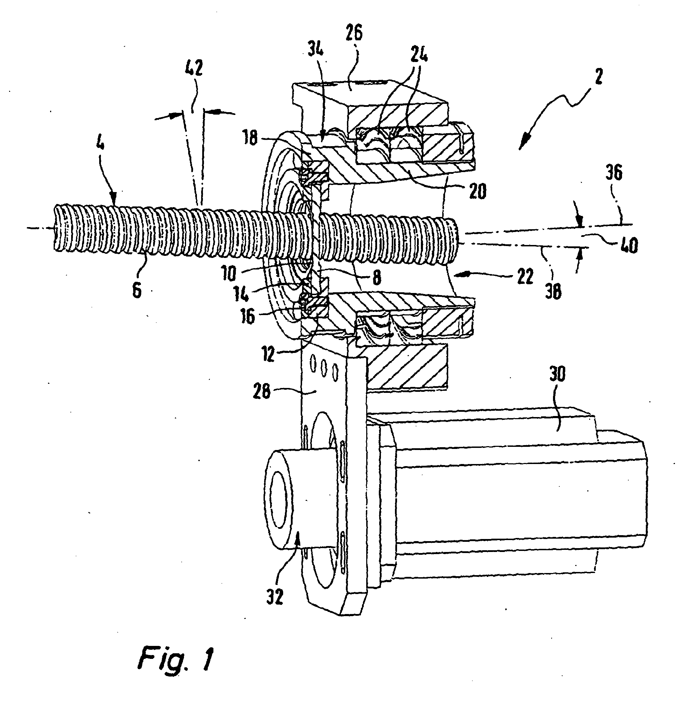

In Figur 1 ist eine Montageeinheit dargestellt, die insgesamt mit dem Bezugszeichen 2 bezeichnet ist. Ferner ist ein als Kugelrollspindel ausgebildetes Werkstück 4 dargestellt, dass eine Kugellauffläche 6 aufweist.

Zur Bearbeitung der Kugellauffläche 6 ist ein ringförmiges Werkzeug 8 vorgesehen, das im Folgenden als Finishwerkzeug bezeichnet ist. Dieses weist eine nach radial innen weisende, im Profil bogenförmige Wirkfläche 10 auf. Das Profil der Wirkfläche 10 ist zumindest abschnittsweise dem Profil der Kugellauffläche 6 angepasst.

Das Finishwerkzeug 8 ist an einem Haltekörper 12 gehalten, der das Finishwerkzeug 8 radial außen umgibt und eine Seite des Finishwerkzeugs 8 in axialer Richtung abstützt. Das Finishwerkzeug 8 ist über einen Klemmring 14 und mittels Schrauben 16 an dem Haltekörper 12 festgelegt.

Das Finishwerkzeug 8 bzw. der Haltekörper 12 ist an einer Halterung 18 mit Hilfe nicht weiter dargestellter Schrauben fixiert. Die Halterung 18 ist an einem im Wesentlichen rotationssymmetrischen Lagerkörper 20 ausgebildet, in dessen Zentrum ein Freiraum 22 zur Aufnahme eines Abschnitts des Werkstücks 4 ausgebildet ist.

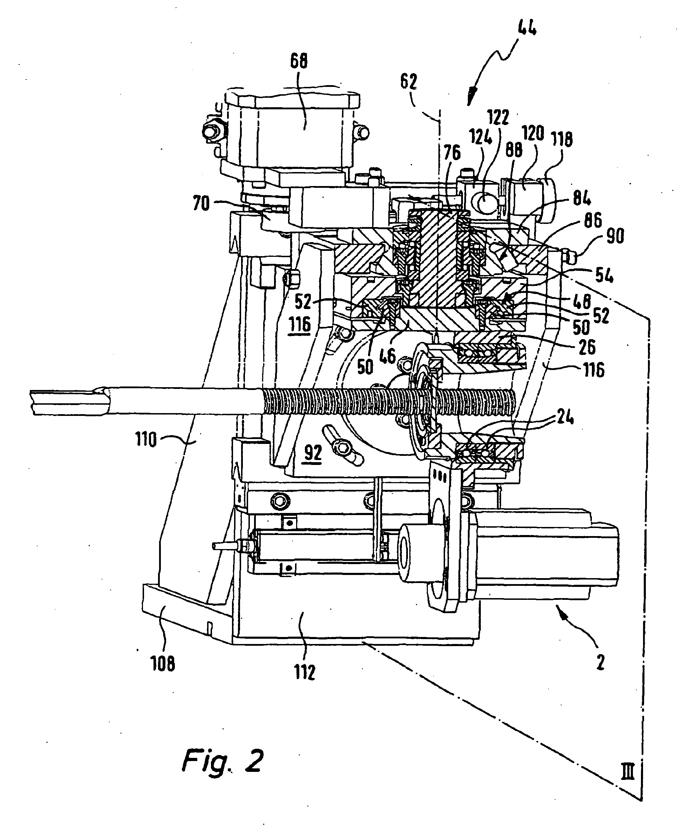

Der Lagerkörper 20 ist über auch in Figur 2 dargestellte Wälzlager 24 an einem Gehäuse 26 drehbar gelagert. Mit diesem Gehäuse ist ein von diesem abstehender Flansch 28 verbunden, an dem ein Motor 30 befestigt ist. Der Motor 30 weist eine Antriebsfläche 32 auf, um einen nicht dargestellten Riemen anzutreiben, der auf eine Abtriebsfläche 34 des Lagerkörpers 20 wirkt, so dass mit Hilfe des Motors 30 und des Riementriebs der Lagerkörper 20 und somit das Finishwerkzeug 8 rotatorisch angetrieben werden kann. Hierbei rotiert das Finishwerkzeug 8 um eine Finishwerkzeugachse 36.

Das Werkstück 4 kann mit Hilfe eines nicht dargestellten Werkstück-Antriebs rotatorisch angetrieben werden, so dass es um eine Werkstückachse 38 rotiert. Zwischen der Finishwerkzeugachse 36 und der Werkstückachse 38 ist ein Neigungswinkel 40 ausgebildet, der für rotationssymmetrische Kugellaufflächen 0° beträgt. Weist die Kugellauffläche 6, sowie in Figur 1 dargestellt, einen Steigungswinkel 42 auf, kann der Neigungswinkel 40 entsprechend erhöht werden.

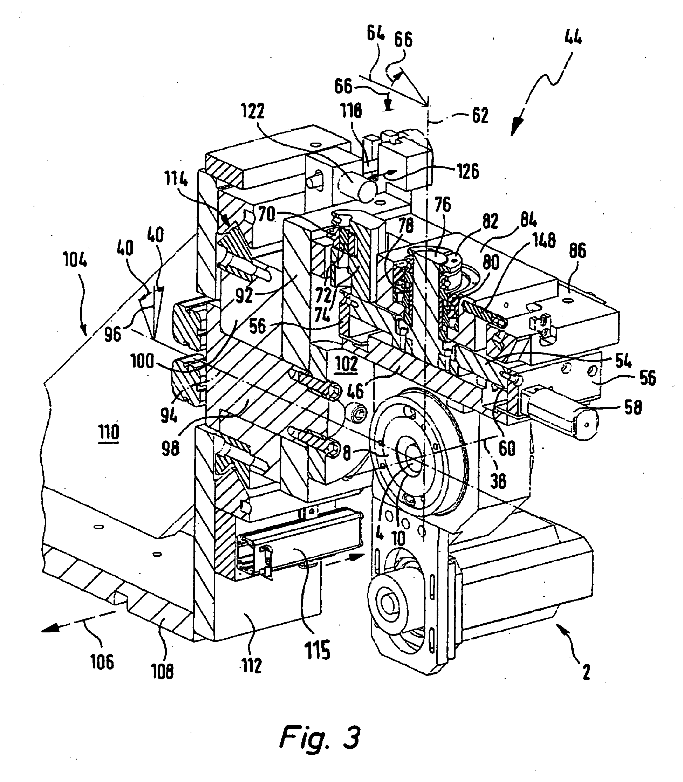

In den Figuren 2 und 3 ist eine Vorrichtung insgesamt mit dem Bezugszeichen 44 bezeichnet. Diese weist die mit Bezug auf Figur 1 beschriebene Montageeinheit 2 auf. Das in Figur 1 obere Ende des Gehäuses 26 ist gemäß Figuren 2 und 3 fest mit einer Lagerplatte 46 verbunden. Die Lagerplatte 46 ist entlang einer Linearführung 48 verschieblich gelagert. Die Linearführung 48 weist zwei symmetrisch zueinander angeordnete Lagerelemente 50 auf, die fest mit der Lagerplatte 46 verbunden sind. Die Lagerelemente 50 wirken mit jeweils außen angeordneten Lagerelementen 52 zusammen, die fest mit einem Trägerelement 54 verbunden sind. Gemäß Figur 3 ist das Trägerelement 54 endseitig mit Platten 56 verbunden, wobei an der in Figur 3 vorderen Platte 56 ein Zustellantrieb 58 angeordnet ist. Dieser Antrieb ist bspw. elektromechanisch, pneumatisch oder hydraulisch und treibt eine Kolbenstange 60 an. Mit Hilfe der Kolbenstange 60 kann die Lagerplatte 46 relativ zu dem Trägerelement 54 verschoben werden, so dass die Wirkfläche 10 des Finishwerkzeugs 8 in Richtung auf die zu bearbeitende Oberfläche des Werkstücks 4 zugestellt und entgegensetzt bewegt werden kann. Bei Kontakt der Wirkfläche 10 mit dem Werkstück 4 übt der Zustellantrieb eine konstante Kraft aus. Dabei lässt der Zustellantrieb eine Bewegung der Wirkfläche in zu dem Werkstück 4 radialer Richtung zu, so dass Rundlauffehler des Werkstücks 4 ausgeglichen werden können.

Die bisher beschriebene Einheit weist einen weiteren Freiheitsgrad auf und ist um eine mit Bezugszeichen 62 bezeichnete Oszillationsachse verschwenkbar. Ausgehend von einer in Figur 3 mit 64 bezeichneten Mittellage kann die bisher beschriebene Einheit und insbesondere das Finishwerkzeug 8 um einen Oszillationswinkel 66 hin- und herbewegt werden.

Zur Erzeugung der oszillierenden Bewegung des Finishwerkzeugs 8 ist ein in Figur 2 mit 68 bezeichneter Oszillationsantrieb vorgesehen. Dieser erzeugt eine Drehbewegung, die auf ein erstes Ende eines relativ zur Drehachse exzentrisch gelagerten Pleuels 70 übertragen wird. Das gegenüberliegende Ende des Pleuels 70 ist in Figur 3 geschnitten dargestellt. In diesem Bereich umgreift das Pleuel 70 einen nur abschnittsweise dargestellten Bolzen 72, der in einer Bolzenaufnahme 74 gelagert ist. Über das Pleuel 70 wird der Bolzen 72 und die Bolzenaufnahme 74 um die Oszillationsachse 62 verschwenkt. Zur Übertragung dieser Bewegung auf das Finishwerkzeug 8 ist die Bolzenaufnahme 74 fest mit dem Trägerelement 54 verbunden. Das Trägerelement 54 wiederum ist mit einem die Oszillationsachse 62 definierenden Achselement 76 verbunden. Das Achselement 76 ist über eine Lagerung 78 in axialer und radialer Richtung gelagert. Zur Abdichtung der Lagerung 78 ist ein Dichtring 80 vorgesehen. Um die Lagerung 78 in axialer Richtung vorspannen zu können, ist ein Spannring 82 vorgesehen. Die Lagerung 78 ist in einer mit 84 bezeichneten Achsaufnahme angeordnet.

Um den Abstand zwischen der Oszillationsachse 62 und der Werkstückachse 38 einstellen zu können, ist die Achsaufnahme 84 relativ zu einem Plattenelement 86 mit Hilfe einer in Figur 2 mit 88 bezeichneten Linearführung verschieblich gelagert. Um die Achsaufnahme 84 und das Plattenelement 86 relativ zueinander zu fixieren, sind in Figur 2 mit 90 bezeichnete Klemmschrauben vorgesehen.

Zur Einstellung des auch in Figur 1 dargestellten Neigungswinkels 40 ist das Plattenelement 86 fest mit einer rückwärtigen Platte 92 verbunden, die um eine Neigungsachse 94 verdreht werden kann (siehe Figur 3). Somit kann ausgehend von einer Mittellage 96 die bisher beschriebene Einheit um den Neigungswinkel 40 verstellt werden, um die sich gewindeartig erstreckende Kugellauffläche 6 des Werkstücks 4 bearbeiten zu können.

Die Neigungsachse 94 wird definiert durch einen Lagerbolzen 98. Dieser ist in einem Zwischenstück 100 gehalten, das mit seiner Vorderseite (ohne Bezugszeichen) an der Rückseite (ohne Bezugszeichen) der rückwärtigen Platte 92 anliegt. Auf der anderen Seite der rückwärtigen Platte 92 ist eine Klemmplatte 102 angeordnet, die mit dem Lagerbolzen 98 verschraubt ist. Durch Lösen der Verschraubung kann der Abstand zwischen dem zwischenstück 100 und der Klemmplatte 102 vergrößert werden, so dass die rückwärtige Platte 92 um die Neigungsachse 94 verdreht werden kann.

Die Vorrichtung 44 weist einen insgesamt mit dem Bezugszeichen 104 bezeichneten Schlitten auf. Dieser Schlitten ist mit Hilfe nicht weiter dargestellter Antriebsmittel entlang eines Verfahrwegs 106 verfahrbar, der parallel zur Werkstückachse 38 verläuft.

Der Schlitten 104 weist eine Bodenplatte 108, eine rückwärtige Stützplatte 110 sowie eine Trägerplatte 112 auf. Das Zwischenstück 100 und die Trägerplatte sind parallel zu der Richtung der Werkstücksachse 38 mit Hilfe einer Linearführung 114 zueinander verschieblich gelagert. Eine Relativbewegung zwischen dem Schlitten 104 und dem Zwischenstück 100 kann über eine Wegmesseinheit 115 (vgl. Figur 3) erfasst werden.

Zur Erhöhung der Stabilität der bisher beschriebenen Einheit sind Versteifungen 116 vorgesehen, die das Plattenelement 86 sowie die rückwärtige Platte 92 gegeneinander abstützen (siehe Figur 2). Um die Neigung der durch die Bauteile 92 und 86 begrenzten Einheit um die Neigungsachse 94 exakt einstellen zu können, ist eine Stellschraube 118 vorgesehen. Diese ist an einer Lagerschale 120 gelagert, die fest mit dem Zwischenstück 100 verbunden ist. Die Stellschraube 118 greift in einen Drehbolzen 122, der wiederum drehbar in einer Aufnahme 124 gelagert ist, die wiederum mit der rückwärtigen Platte 92 verbunden ist.

Zur Einstellung des Neigungswinkels 40 muss zunächst die Verschraubung zwischen der Klemmplatte 102 und dem Lagerbolzen 98 gelockert werden, so dass die rückwärtige Platte 92 beweglich ist. Anschließend wird die Stellschraube 118 so lange verdreht, bis ein gewünschter Neigungswinkel 40 erreicht ist. Ein Maß für den Neigungswinkel 40 ist auch durch den in Figur 3 mit dem Bezugszeichen 126 bezeichneten Abstand zwischen dem freien Ende des Drehbolzens 122 und einer dem Drehbolzen 122 zugewandten Fläche der Lagerschale 120 definiert.

Mit Hilfe der Linearführung 114 wird erreicht, dass das Finishwerkzeug 8 in einer zu dem Verfahrweg 106 parallelen Richtung spielbehaftet gelagert ist. Auf diese Weise können Toleranzen der zu bearbeitenden Kugellauffläche 6 ausgeglichen werden, so dass die Querkraftbelastung des Finishwerkzeugs 8 minimiert wird.

Mit der Wegmesseinheit 115 kann erfasst werden, ob die Relativbewegung zwischen dem Schlitten 104 und dem Zwischenstück 100 derart ist, dass sie nicht zu dem Vorschub des Schlittens passt, der durch die Steigung der Kugellauffläche pro einmaliger Umdrehung des Werkstücks 4 vorgegeben ist. Auf diese Weise kann auch detektiert werden, dass das Werkstück 4 nicht rotiert.

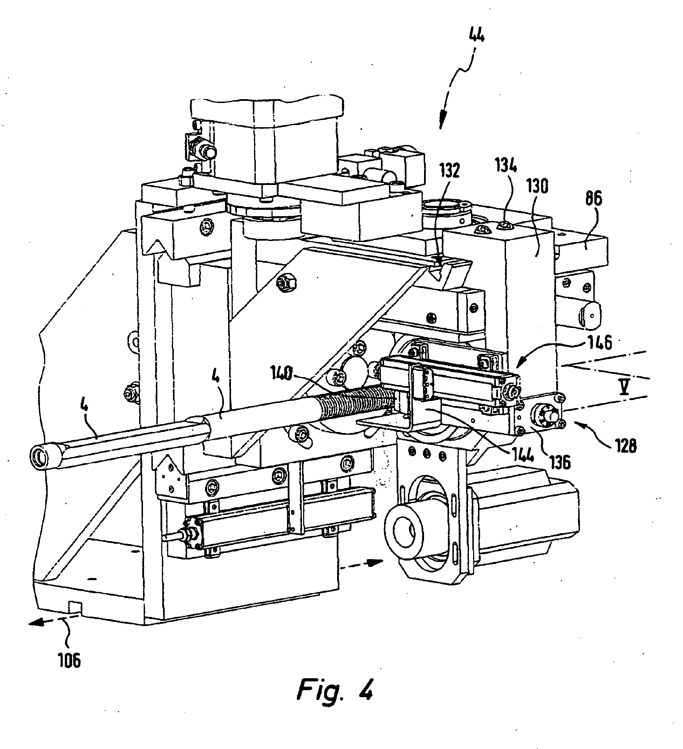

Zur weiteren Minimierung der Querkraftbelastung des Finishwerkzeugs 8 weist die Vorrichtung 44 eine in Figur 4 insgesamt mit dem Bezugszeichen 128 bezeichnete Führungseinrichtung auf. Diese umfasst einen sich an dem Plattenelement 86 abstützenden Arm 130. Über eine Linearführung 132 ist der Arm 130 parallel zu der in Figur 1 dargestellten Finishwerkzeugachse 36 verschieblich gelagert. Mit Hilfe von Befestigungsschrauben 134 kann der Arm 130 an dem Plattenelement 86 fixiert werden.

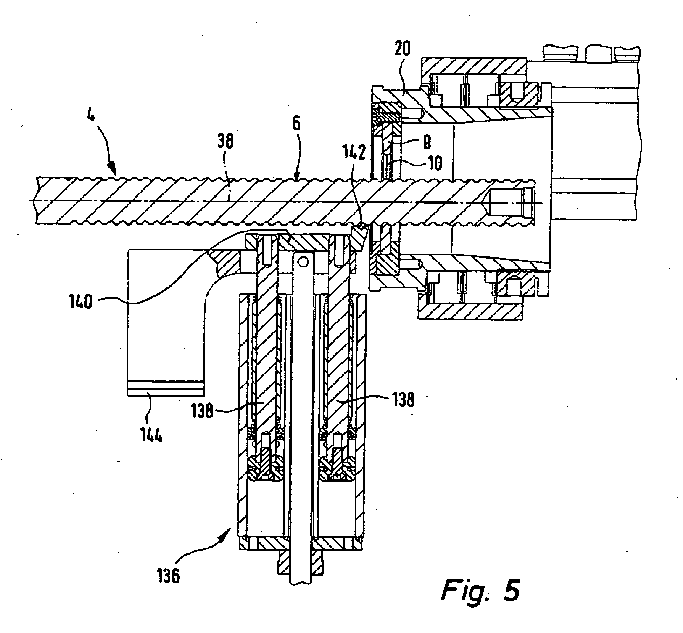

An dem in Figur 4 unteren Ende des Arms 130 ist ein Zustellantrieb 136 angeordnet, der in Figur 5 geschnitten dargestellt ist. Dieser umfasst zwei doppelt wirkende Kolben 138, die an ihrem freien Ende mit einem Halter 140 verbunden sind. An dem Halter 140 ist ein zylindrisches Kontaktelement 142 angeordnet, das sich senkrecht zu der in Figur 1 dargestellten Finishwerkzeugachse 36 erstreckt. Das Kontaktelement 142 ist aus einem polykristallinen Diamant gebildet und somit besonders hart und verschleißbeständig. Das Kontaktelement 142 greift in eine Windung der Kugellauffläche 6.

Der Halter 140 ist über einen winklig abstehenden Abschnitt 144 mit einem in Figur 4 dargestellten Wegmesssystem 146 gekoppelt, so dass die Lage des Halters 140 bzw. des Kontaktelements 142 relativ zu dem Arm 130 erfasst werden kann.

Mit Hilfe des Kontaktelements 142 kann das in Figur 5 im Querschnitt dargestellte Finishwerkzeug 8 querkraftentlastet werden. Die durch Toleranzen der zu finishenden, vorbearbeiteten Kugellauffläche 6 entstehenden Abweichungen von einem Idealmaß können durch die Linearführung 114 kompensiert werden. Die auftretenden Querkräfte können über das Kontaktelement 142 aufgenommen werden. Um den Abstand zwischen dem Kontaktelement 142 und dem Finishwerkzeug 8 in einer zu der Werkzeugachse 36 parallelen Richtung exakt einstellen zu können, ist an der Achsaufnahme 84 ein in Figur 3 dargestellter Eichstift 148 vorgesehen. Der Abstand zwischen dem Kontaktelement 142 und dem Finishwerkzeug 8 ist bestimmt durch den Abstand des Eichstiftes 148 zu der in Figur 4 rückwärtigen, in der gewählten Perspektive nicht sichtbaren Fläche des Arms 130.

Mit Hilfe des beschriebenen Finishwerkzeugs 8, der Führungseinrichtung 128 und der Vorrichtung 44 kann ein insbesondere als Kugelrollspindel ausgebildetes Werkstück 4 finishend bearbeitet werden, so dass die Kugellauffläche 6 des Werkstücks 4 höchste Oberflächenqualitäten erreicht. Mit Hilfe der dargestellten Vorrichtung 44 können sehr kurze Bearbeitungszeiten erzielt werden. Dies liegt daran, dass die Wirkfläche 10 des Finishwerkzeugs 8 ringförmig ist und insbesondere rotatorisch angetrieben werden kann. Auch das Werkstück 4 kann rotatorisch angetrieben werden. Der Schlitten 104 wird entlang des Fahrwegs 106 so angetrieben, dass das Finishwerkzeug 8 bei Rotation des Werkstücks 4 in Eingriff mit der Kugellauffläche bleibt. Dabei ist das Finishwerkzeug 8 dank des Kontaktelements 142 der Führungseinrichtung 128 nicht querkraftbelastet.

Mit Hilfe der Einstellung des Neigungswinkels 40 um die Neigungsachse 94 sowie mit Hilfe der Oszillation des Finishwerkzeugs um die Oszillationsachse 62 können bei kurzen Bearbeitungsdauern auch hochkomplexe Geometrien der Kugellauffläche 6 gefertigt werden.

Die Vorrichtung 44 ermöglicht es, Werkstücke 4 schnell und prozesssicher feinstbearbeiten zu können. Während der Serienfertigung müssen lediglich das Werkzeug 8 sowie das Kontaktelement 142 nach Erreichen der Verschleißgrenzen ausgetauscht werden.

## Patentansprüche

1. Führungseinrichtung (128) für ein Werkzeug (8) zur finishenden, burstenden und/oder polierenden Feinstbearbeitung von Oberflächen eines Werkstücks (4), wobei die Führungseinrichtung (128) mindestens ein zusätzliches Kontaktelement (142) aufweist, das zumindest mittelbar mit dem Werkzeug (8) verbunden ist und für einen Kontakt mit einem Kontaktabschnitt der Oberfläche des Werkstücks (4) ausgebildet ist, **dadurch gekennzeichnet, dass** das Kontaktelement (142) für einen formschlüssigen Eingriff mit dem als Kugellauffläche (6) oder als Gewindefläche ausgebildeten Kontaktabschnitt des Werkstücks (4) ausgebildet ist, so dass während der Bearbeitung der Oberfläche des Werkstücks (4) auftretende Querkräfte mit Hilfe des mit der Kugellauffläche (6) oder mit der Gewindefläche in Eingriff stehenden Kontaktelements (142) aufgenommen werden und das Werkzeug (8) von diesen Querkräften entlastet ist.

2. Führungseinrichtung (128) nach Anspruch 1, **dadurch gekennzeichnet, dass** die Kugellauffläche (6) oder die Gewindefläche gewindeartig um das Werkstück (4) herum verläuft.

3. Führungseinrichtung (128) nach einem der vorhergehenden Ansprüche, **dadurch gekennzeichnet, dass** der Abstand zwischen dem Kontaktelement (142) und dem Werkzeug (8) einstellbar ist, insbesondere in einer zu einer Werkzeugachse (36) des Werkzeugs (8) parallelen Richtung.

4. Führungseinrichtung (128) nach einem der vorhergehenden Ansprüche, **dadurch gekennzeichnet, dass** das Kontaktelement (142) zylindrisch, kugelförmig oder tonnenförmig ist.

5. Führungseinrichtung (128) nach einem der vorhergehenden Ansprüche, **dadurch gekennzeichnet, dass** das Kontaktelement (142) ringförmig ist.

6. Führungseinrichtung (128) nach einem der vorhergehenden Ansprüche, **dadurch gekennzeichnet, dass** das Kontaktelement (142) mehrteilig ist.

7. Führungseinrichtung (128) nach einem der vorhergehenden Ansprüche, **dadurch gekennzeichnet, dass** das Kontaktelement (142) Diamantpartikel aufweist.

8. Führungseinrichtung (128) nach einem der vorhergehenden Ansprüche, **dadurch gekennzeichnet, dass** das Kontaktelement (142) aus einem polykristallinen Diamant-Werkstoff (PKD) gebildet ist.

9. Führungseinrichtung (128) nach einem der vorhergehenden Ansprüche, **dadurch gekennzeichnet, dass** das Kontaktelement (142) zumindest anteilig aus einem Hartmetall, einem Hartkunststoff und/oder einem keramischen Material gebildet ist.

10. Führungseinrichtung (128) nach einem der vorhergehenden Ansprüche, **dadurch gekennzeichnet, dass** ein Zustellantrieb (136) vorgesehen ist, mit dem das Kontaktelement (142) in Richtung auf den Kontaktabschnitt des Werkstücks (4) und entgegengesetzt bewegbar ist.

11. Führungseinrichtung (128) nach Anspruch 10, **dadurch gekennzeichnet, dass** der Zustellantrieb (136) mit einem Wegmesssystem (146) gekoppelt ist.

12. Führungseinrichtung (128) nach einem der vorhergehenden Ansprüche, **dadurch gekennzeichnet, dass** das Kontaktelement (142) und das Werkzeug (8) an einer Vorrichtung (44) gelagert sind, mit der das Werkzeug (8) und/oder das Werkstück (4) rotierend und/oder oszillierend antreibbar ist oder sind.

13. Führungseinrichtung (128) nach Anspruch 12, **dadurch gekennzeichnet, dass** die Vorrichtung (44) Antriebsmittel aufweist, mit denen die Vorrichtung (44) und die Führungseinrichtung (128) entlang eines Verfahrwegs (106) parallel zu einer Werkstückachse (38) des Werkstücks (4) verfahrbar ist.

14. Verfahren zur Herstellung eines insbesondere als Kugelrollspindel ausgebildeten Werkstücks (4) unter Verwendung einer Führungseinrichtung (128) nach mindestens einem der vorhergehenden Ansprüche, **dadurch gekennzeichnet, dass** vor der Bearbeitung der Oberfläche des Werkstücks (4) das Kontaktelement (142) der Führungseinrichtung (128) mit dem Kontaktabschnitt des Werkstücks (4) in Kontakt gebracht wird und während der Bearbeitung dort verbleibt.

## Claims

1. Guiding device (128) for a tool (8) for fine machining of the surfaces of a work piece (4) by finishing, brushing and/or polishing, whereby the guiding device (128) has at least one additional contact element (142), which is at least indirectly connected with the tool (8) and is formed to provide for a contact with a contact section of the surface of the work piece (4), **characterised in that** the contact element (142) is formed to provide a positive locking engagement with the contact section of the work piece (4), which is formed as a ball bearing surface (6) or as a threaded surface, so that transverse forces that occur during the processing of the surface of the work piece (4) are absorbed by the contact element (142) which is in engagement with the ball bearing surface (6) or the threaded surface and so that the tool (8) is protected from these transverse forces.

2. Guiding device (128) according to claim 1, **characterised in that** the ball bearing surface (6) or the threaded surface runs helically around the work piece (4).

3. Guiding device (128) according to one of the foregoing claims, **characterised in that** the distance between the contact element (142) and the tool (8) is adjustable, in particular in a direction parallel with the axis (36) of the tool (8).

4. Guiding device (128) according to one of the foregoing claims, **characterised in that** the contact element (142) is cylindrical, spherical or barrel-shaped.

5. Guiding device (128) according to one of the foregoing claims, **characterised in that** the contact element (142) is ring-shaped.

6. Guiding device (128) according to one of the foregoing claims, **characterised in that** the contact element (142) comprises several parts.

7. Guiding device (128) according to one of the foregoing claims, **characterised in that** the contact element (142) has diamond particles.

8. Guiding device (128) according to one of the foregoing claims, **characterised in that** the contact element (142) is formed from a polycrystalline diamond material (PCD).

9. Guiding device (128) according to one of the foregoing claims, **characterised in that** the contact element (142) is at least partially formed from hard metal, hard plastic and/or a ceramic material.

10. Guiding device (128) according to one of the foregoing claims, **characterised in that** an adjuster drive (136) is provided, with which the contact element (142) can be moved towards the contact section of the work piece (4) and in the opposite direction.

11. Guiding device (128) according to claim 10, **characterised in that** the adjuster drive (136) is coupled with a distance measuring system (146).

12. Guiding device (128) according to one of the foregoing claims, **characterised in that** the contact element (142) and the tool (8) are mounted on a device (44), with which the tool (8) and/or the work piece (4) can be driven in a rotational and/or oscillating motion.

13. Guiding device (128) according to claim 12, **characterised in that** the device (44) has a drive means, with which the device (44) and the guiding device (128) can be traversed along a path (106) parallel to a work piece axis (38) of the work piece (4).

14. Method for the manufacture of a work piece (4), in particular in the form of a ball bearing spindle, using a guiding device (128) in accordance with at least one of the foregoing claims, **characterised in that** before the machining of the surface of the work piece (4) the contact element (142) of the guiding device (128) is brought into contact with the contact section of the work piece (4) and remains there during the machining.

## Revendications

1. Dispositif de guidage (128) pour un outil (8) de micro-usinage de finition, brossage et/ou polissage de surfaces d'une pièce d'oeuvre (4), lequel dispositif de guidage (128) présente au moins un élément de contact supplémentaire (142) qui est relié à l'outil (8) au moins indirectement et formé pour assurer un contact avec une section de contact de la surface de la pièce d'oeuvre (4), **caractérisé en ce que** l'élément de contact (142) est formé pour venir en prise selon un engagement positif avec la section de contact réalisée sous la forme d'une surface de roulement de billes (6) ou d'une surface filetée de la pièce d'oeuvre (4) de telle façon que les forces transversales générées pendant l'usinage de la surface de la pièce d'oeuvre (4) sont absorbées à l'aide de l'élément de contact (142) en prise avec la surface de roulement de billes (6) ou avec la surface filetée et que l'outil (8) est déchargé de ces forces transversales.

2. Dispositif de guidage (128) selon la revendication 1, **caractérisé en ce que** la surface de roulement de billes (6) ou la surface filetée s'étend en spirale autour de la pièce d'oeuvre (4).

3. Dispositif de guidage (128) selon l'une des revendications précédentes, **caractérisé en ce que** la distance entre l'élément de contact (142) et l'outil (8) est réglable, en particulier dans une direction parallèle à un axe (36) de l'outil (8).

4. Dispositif de guidage (128) selon l'une des revendications précédentes, **caractérisé en ce que** l'élément de contact (142) est cylindrique, sphérique ou en forme de tonneau.

5. Dispositif de guidage (128) selon l'une des revendications précédentes, **caractérisé en ce que** l'élément de contact (142) est annulaire.

6. Dispositif de guidage (128) selon l'une des revendications précédentes, **caractérisé en ce que** l'élément de contact (142) est en plusieurs pièces.

7. Dispositif de guidage (128) selon l'une des revendications précédentes, **caractérisé en ce que** l'élément de contact (142) présente des particules de diamant.

8. Dispositif de guidage (128) selon l'une des revendications précédentes, **caractérisé en ce que** l'élément de contact (142) est formé à partir d'un matériau à base de diamant polycristallin (DPC).

9. Dispositif de guidage (128) selon l'une des revendications précédentes, **caractérisé en ce que** l'élément de contact (142) est formé au moins en partie à partir d'un métal dur, d'une matière plastique dure et/ou d'un matériau céramique.

10. Dispositif de guidage (128) selon l'une des revendications précédentes, **caractérisé en ce qu'**il est prévu un mécanisme d'avance (136) au moyen duquel l'élément de contact (142) peut être déplacé en direction de la section de contact de la pièce d'oeuvre (4) et dans le sens inverse.

11. Dispositif de guidage (128) selon la revendication 10, **caractérisé en ce que** le mécanisme d'avance (136) est couplé à un système de mesure de course (146).

12. Dispositif de guidage (128) selon l'une des revendications précédentes, **caractérisé en ce que** l'élément de contact (142) et l'outil (8) sont supportés par un dispositif (44) au moyen duquel l'outil (8) et/ou la pièce d'oeuvre (4) peut/peuvent être entraîné(s) selon un mouvement rotatif et/ou oscillant.

13. Dispositif de guidage (128) selon la revendication 12, **caractérisé en ce que** le dispositif (44) présente des moyens d'entraînement avec lesquels le dispositif (44) et le dispositif de guidage (128) peuvent être déplacés le long d'une course d'usinage (106) parallèle à un axe (38) de la pièce d'oeuvre (4).

14. Procédé de fabrication d'une pièce d'oeuvre (4), en particulier réalisée sous la forme d'une broche filetée à billes, en utilisant un dispositif de guidage (128) selon l'une au moins des revendications précédentes, **caractérisé en ce que**, avant l'usinage de la surface de la pièce d'oeuvre (4) l'élément de contact (142) du dispositif de guidage (128) est amené en contact avec la section de contact de la pièce d'oeuvre (4) et laissé dans cette position pendant l'usinage.
